# FASCICULE DE BREVET EUROPEEN

(11) **EP 3 494 373 B1**
(45) Date de publication et mention de la délivrance du brevet: **23.10.2019**
(21) Numéro de dépôt: 17786971.6
(22) Date de dépôt: 29.09.2017
(51) Int. Cl.: G01J 3/02, G01J 3/04, G01J 3/22, G01J 3/28, G02B 17/06

(54) **DISPOSITIF SPECTROPHOTOMETRIQUE A PLUSIEURS BANDES SPECTRALES DE MESURE**
SPEKTROPHOTOMETRISCHE VORRICHTUNG MIT EINER VIELZAHL VON SPEKTRALMESSBÄNDERN
SPECTROPHOTOMETRIC DEVICE WITH A PLURALITY OF SPECTRAL MEASUREMENT BANDS

(30) Priorité: 13.10.2016 FR 1659920
(43) Date de publication de la demande: 12.06.2019
(73) Titulaire: Airbus Defence and Space SAS, 31402 Toulouse Cedex 4 (FR)
(72) Inventeur: PASTERNAK, Frédéric, 31400 Toulouse (FR)
(74) Mandataire: Cabinet Plasseraud
(86) Numéro de dépôt international: PCT/FR2017/052672
(87) Numéro de publication internationale: WO 2018/069598

(56) Documents cités:
- US-A1- 2006 038 997
- V Pascal ET AL: "AN IMPROVED MICROCARB DISPERSIVE INSTRUMENTAL CONCEPT FOR THE MEASUREMENT OF GREENHOUSE GASES CONCENTRATION IN THE ATMOSPHERE", , 7 octobre 2014 (2014-10-07), XP055390649, Extrait de l'Internet: URL:http://esaconferencebureau.com/Custom/ ICSO/2014/Papers/3. Thursday 9 October/Session 11C Earth Atmospher Spectometers 1/4.66432_PASCAL.pdf

## Description

La présente invention concerne un dispositif spectrophotométrique à plusieurs bandes spectrales de mesure, ainsi qu'un procédé de mesure de composants chimiques qui sont présents dans l'atmosphère terrestre.

Pour mieux comprendre l'évolution du système climatique terrestre, des missions spatiales sont envisagées pour caractériser les flux de composés carbonés qui se produisent entre l'atmosphère, les océans et les surfaces émergées de la Terre. Pour cela, des mesures spectrophotométriques doivent être effectuées à partir d'un satellite en orbite autour de la Terre, dans des bandes spectrales qui contiennent des raies d'absorption de composés carbonés gazeux, notamment des composés à effet de serre tels que le dioxyde de carbone (CO₂) ou des composés d'aérosols. Or pour obtenir le maximum d'informations en réduisant le coût de mission, le dispositif spectrophotométrique qui est utilisé doit procurer un compromis optimal entre le nombre des bandes spectrales dans lesquelles des mesures spectrophotométriques peuvent être réalisées simultanément, et le poids, l'encombrement ainsi que le prix du dispositif spectrophotométrique.

Dans l'instrument OCO 2 lancé en 2014, trois bandes d'absorption du dioxyde de carbone (CO₂) sont analysées à l'aide de trois spectromètres à haute résolution, qui sont alimentés par un télescope commun.

Pour l'instrument MICROCARB, le CNES (ICSO 2014 «Improved Microcarb concept» Véronique Pascal et al.) a proposé d'utiliser un spectromètre à réseau échelle selon des ordres de diffraction élevés, afin de couvrir plusieurs bandes spectrales étroites pour analyser des composants atmosphériques clefs. Les différents ordres de diffraction se superposant au niveau de l'image du plan focal, il est nécessaire d'implanter un système pour les séparer. Afin d'obtenir un instrument plus simple et plus compact, et également couvrir un nombre important de bandes spectrales, le CNES a proposé de séparer les bandes spectrales à l'aide d'un réseau croisé qui est inséré dans le chemin optique. Ce réseau permet d'étaler les longueurs d'onde dans la direction perpendiculaire à la direction de dispersion spectrale qui est définie par le réseau échelle principal. Chaque ordre de dispersion du réseau principal se projette alors sur une colonne de la matrice du détecteur, l'ordre suivant se trouvant décalé dans la direction perpendiculaire. Il est ainsi possible d'acquérir l'ensemble des bandes spectrales sur deux détecteurs matriciels dans deux directions perpendiculaires.

Ce concept permet donc d'observer plusieurs bandes spectrales, et de plus rejette naturellement les longueurs d'onde hors bande. Néanmoins, si les bandes spectrales d'intérêt pour la mission ne sont pas adjacentes, l'étendue globale de la dispersion spectrale peut dépasser la surface de matrice de détecteur qui est disponible. Afin de compenser au moins partiellement cet effet, le CNES a également proposé d'utiliser le réseau croisé sur plusieurs ordres afin de «ramener» les longueurs d'ondes lointaines sur la surface de la matrice du détecteur. Mais on retrouve alors une superposition des ordres de diffraction et un risque d'images parasites, ce qui atténue l'avantage initial du réseau croisé.

Pour améliorer encore la compacité de ce type d'instruments en conservant ou en améliorant la précision de mesures, un premier aspect de l'invention propose un dispositif spectrophotométrique à plusieurs bandes spectrales de mesure, qui comprend :
- un télescope ayant une pupille d'entrée et un plan focal de sortie, et adapté pour focaliser dans le plan focal de sortie, du rayonnement qui entre dans ce télescope à travers la pupille d'entrée ;
- un spectrophotomètre ayant une entrée qui est superposée au plan focal de sortie du télescope, et comprenant un composant d'étalement spectral ainsi qu'un détecteur matriciel qui est conjugué optiquement avec l'entrée du spectrophotomètre.

Le détecteur possède une surface photosensible qui s'étend dans une première direction de détection parallèle à une direction d'étalement spectral produite par le composant d'étalement spectral, et qui s'étend aussi dans une seconde direction de détection perpendiculaire à la première direction de détection.

Selon l'invention, le dispositif spectrophotométrique comprend en outre :
- un masque pupillaire disposé dans la pupille d'entrée du télescope, et ayant plusieurs ouvertures formant des sous-pupilles séparées qui sont respectivement dédiées aux bandes spectrales de mesure ;
- des prismes de séparation pupillaire, qui sont disposés un-à-une contre les ouvertures du masque pupillaire, de sorte que chaque prisme de séparation pupillaire dévie une partie du rayonnement qui traverse la sous-pupille correspondante selon une direction de déviation prismatique qui est commune à tous les prismes de séparation pupillaire, et avec une amplitude de déviation prismatique qui est différente de celle de chaque autre prisme de séparation pupillaire, et le spectrophotomètre étant orienté par rapport aux prismes de séparation pupillaire de sorte que la seconde direction de détection corresponde optiquement à la direction de déviation prismatique à travers le télescope et le spectrophotomètre ;
- plusieurs fentes possiblement incurvées, qui sont réparties dans l'entrée du spectrophotomètre de sorte qu'une orientation longitudinale de chaque fente corresponde optiquement à la direction de déviation prismatique à travers le télescope, et les fentes étant décalées entre elles de façon à recevoir chacune à travers l'une des ouvertures du masque pupillaire et l'un des prismes de séparation pupillaire, et à travers le télescope, une partie respective du rayonnement qui provient d'une direction de pointage du télescope ; et
- un premier ensemble de filtres, déterminant chacun l'une des bandes spectrales de mesure, les filtres du premier ensemble étant disposés devant la surface photosensible du détecteur, chaque filtre du premier ensemble étant efficace à l'intérieur d'une ouverture de détection qui est superposée selon la seconde direction de détection à une image d'une seule des fentes, formée par le spectrophotomètre avec une partie du rayonnement entrée dans le télescope par une seule des ouvertures du masque pupillaire, et l'ouverture de détection de chaque filtre s'étendant selon la première direction de détection.

Ainsi, dans un dispositif spectrophotométrique conforme à l'invention, chaque bande spectrale de mesure est déterminée par l'une des ouvertures du masque pupillaire qui est placé dans la pupille d'entrée du télescope, par le prisme de séparation pupillaire et la fente qui sont associés à cette ouverture du masque pupillaire, ainsi que par l'un des filtres situés devant le détecteur matriciel. Le dispositif spectrophotométrique ne comprend donc qu'un seul télescope, un seul spectrophotomètre et un seul détecteur qui sont communs à toutes les bandes spectrales de mesure. Pour cette raison, le poids, les dimensions et le prix du dispositif spectrophotométrique sont réduits par rapport à la pluralité des bandes spectrales dans lesquelles des mesures spectrophotométriques peuvent être effectuées simultanément.

En aval des prismes de séparation pupillaire, tout de passe comme si chaque bande était associée à une direction différente de visée. La registration des différentes bandes est assurée au niveau des prismes de séparation pupillaire.

Ainsi, des portions séparées de la surface photosensible du détecteur matriciel sont affectées une-à-une aux bandes spectrales déterminées par les filtres, eux-mêmes situés devant ces portions de la surface photosensible du détecteur matriciel. Ceci simplifie notablement le filtrage et le rend plus efficace, avec la possibilité de compléter par des filtres spécifiques à disposer en amont du composant d'étalement spectral.

Le dispositif de l'invention permet ainsi un libre choix du positionnement des bandes spectrales sur la matrice du détecteur, une facilité d'accommodation d'un plus grand nombre de bandes, une bonne réjection spectrale inter-bande, et d'excellentes performances de réjection de lumière parasite. Les dimensions de pupille peuvent être adaptées indépendamment pour chaque bande, notamment en vue d'une homogénéisation de la diffraction. Enfin, il est possible de compenser la courbure de champ du spectrophotomètre par celle du télescope.

Ainsi, aucun mélange ni cumul ne se produit dans les résultats des mesures spectrophotométriques, entre des parties du rayonnement qui appartiennent à des bandes spectrales séparées.

Les perfectionnements du dispositif de l'invention qui sont cités maintenant sont optionnels et peuvent être mis en œuvre indépendamment les uns des autres ou en combinaison de plusieurs d'entre eux.

Pour réduire encore des transferts de rayonnement qui pourraient néanmoins se produire entre l'une des bandes spectrales et la portion du détecteur dédiée à une autre des bandes spectrales, par exemple à cause de réflexions parasites du rayonnement à l'intérieur du dispositif, celui-ci peut comprendre en outre au moins un second ensemble de filtres, qui correspondent aussi un-à-un aux bandes spectrales de mesure. Les filtres d'un tel second ensemble peuvent être disposés au niveau des prismes de séparation pupillaire, ou à l'intérieur du spectrophotomètre entre l'entrée de ce dernier et le composant d'étalement spectral. Alors, un filtre du premier ensemble et un filtre de chaque second ensemble qui correspondent à une même bande spectrale sont traversés par une même partie du rayonnement qui est entrée dans le télescope par une seule des ouvertures du masque pupillaire.

Encore dans le but de réduire les transferts de rayonnement qui pourraient se produire entre l'une des bandes spectrales et la portion du détecteur qui est dédiée à une autre des bandes spectrales, le dispositif peut comprendre aussi au moins un masque de champ qui est disposé à proximité du plan focal de sortie du télescope, ou dans un plan d'image intermédiaire du télescope. Chaque masque de champ possède des ouvertures qui correspondent aux fentes, ou qui ont des images superposées aux fentes, ces images étant formées par une partie du télescope qui est comprise entre le masque de champ et le plan focal de sortie du télescope, avec le rayonnement entré dans le télescope par les ouvertures du masque pupillaire.

Pour réduire la taille du composant d'étalement spectral, le dispositif peut comprendre en outre un ensemble de prismes supplémentaires, dits prismes d'alignement pupillaire, qui sont disposés contre les fentes. Ces prismes d'alignement pupillaire sont alors adaptés pour superposer sur le composant d'étalement spectral, les unes aux autres toutes les parties du rayonnement qui sont issues de toutes les fentes en étant entrées dans le télescope chacune par une seule des ouvertures du masque pupillaire.

Dans des réalisations préférées de l'invention, le composant d'étalement spectral peut être un réseau diffractant. Le spectrophotomètre peut alors être agencé de sorte que le rayonnement qui est entré dans le télescope par les ouvertures du masque pupillaire soit réfléchi par le réseau diffractant. De façon encore plus préférée, notamment pour réduire dans une mesure supplémentaire l'encombrement qui est dû au spectrophotomètre, celui-ci peut avoir une configuration dite de quasi-Littrow. Dans une telle configuration, le rayonnement qui est incident sur le réseau diffractant et le rayonnement qui émerge de ce dernier ont des chemins optiques qui sont proches, au moins pour une partie de ces chemins optiques. Notamment, le rayonnement qui est incident sur le réseau diffractant et le rayonnement qui émerge de ce même réseau diffractant sont réfléchis par des mêmes miroirs du spectrophotomètre, ayant une fonction de collimation pour le rayonnement incident, et une fonction de focalisation pour le rayonnement émergent.

Avantageusement, le dispositif peut comprendre en outre un brouilleur de polarisation qui est disposé en amont de la pupille d'entrée du télescope par rapport à un sens de propagation du rayonnement dans le télescope. Un tel brouilleur de polarisation est adapté pour mélanger des polarisations différentes dans chaque partie du rayonnement qui traverse une des ouvertures du masque pupillaire.

De façon générale, un dispositif qui est conforme à l'invention peut comprendre au moins N ouvertures dans le masque pupillaire, N prismes de séparation pupillaire, N fentes et N filtres dans chaque ensemble de filtres, et aussi N prismes d'alignement pupillaire le cas échéant, pour permettre d'effectuer simultanément des mesures spectrophotométriques dans N bandes spectrales, N étant un nombre entier qui est compris entre 2 et 12, ou égal à 2 ou 12, de préférence compris entre 4 et 8, ou égal à 4 ou 8.

Le télescope peut être d'un type à trois miroirs.

Selon un autre perfectionnement optionnel de l'invention, le masque pupillaire peut comprendre une ouverture supplémentaire, et le dispositif peut comprendre en outre un système d'imagerie et un composant de séparation de faisceaux qui est disposé dans une pupille de sortie du télescope. Ce composant de séparation de faisceaux est alors adapté pour qu'une partie supplémentaire du rayonnement qui est entrée dans le télescope à travers l'ouverture supplémentaire du masque pupillaire soit transmise au système d'imagerie, alors que les parties du rayonnement qui sont entrées dans le télescope à travers les ouvertures du masque pupillaire ainsi nommées jusqu'à présent, sont transmises en direction des fentes. Le télescope du dispositif peut ainsi être commun au spectrophotomètre et à une voie d'imagerie optionnelle.

En outre, un second aspect de l'invention propose un procédé de mesure de composants chimiques qui sont présents à l'intérieur d'une zone de mesure dans l'atmosphère terrestre, ce procédé comprenant les étapes suivantes :
/1/ installer un dispositif spectrophotomètrique à plusieurs bandes spectrales de mesure qui est conforme au premier aspect de l'invention, à bord d'un satellite ;
/2/ placer le satellite en orbite autour de la Terre, de sorte que le satellite survole la zone de mesure ;
/3/ orienter la direction de pointage du télescope vers la zone de mesure ; et
/4/ pendant que la direction de pointage du télescope est maintenue vers la zone de mesure, activer le détecteur du spectrophotomètre et saisir des signaux de lecture de pixels du détecteur, ces signaux de lecture fournissant, séparément à l'intérieur de bandes géométriques dans la surface photosensible du détecteur qui sont associées optiquement et une-à-une aux fentes à travers le spectrophotomètre, une distribution spectrale d'intensité du rayonnement qui provient de la zone de mesure dans l'une des bandes spectrales de mesure.

Préférablement, le satellite peut être orienté de sorte que la direction de pointage du télescope soit superposée à une direction de nadir du satellite pendant l'étape /4/. Les mesures réalisées peuvent ainsi concerner précisément une colonne verticale d'atmosphère qui située entre le satellite et le sol terrestre ou une surface d'océan.

Préférablement aussi, le satellite peut être orienté de sorte que la direction de déviation prismatique soit perpendiculaire à une direction de défilement d'une image de la zone de mesure formée par le télescope dans le plan focal de sortie, pendant l'étape /4/. Une telle orientation permet d'acquérir plusieurs points de mesure juxtaposés perpendiculairement à la trace dans le cas d'une ligne de visée qui est dirigée vers le Nadir, tout en limitant l'impact d'un effet de filé.

Enfin, notamment pour des missions spatiales qui sont destinées à caractériser les flux de composés carbonés qui se produisent à la surface de la Terre, l'une au moins des bandes spectrales de mesure du dispositif peut comprendre une raie d'absorption d'au moins un composé carboné gazeux, tel que le dioxyde de carbone ou un composé d'aérosol.

D'autres particularités et avantages de la présente invention apparaîtront dans la description ci-après d'exemples de réalisation non limitatifs, en référence aux dessins annexés, dans lesquels :
- la figure 1 est un schéma de principe en perspective d'un dispositif spectrophotométrique à plusieurs bandes spectrales de mesure, qui est conforme à la présente invention ;
- la figure 2 représente une configuration possible d'un masque pupillaire qui peut être utilisé dans un dispositif spectrophotométrique conforme à la présente invention, et qui est associé aux prismes de séparation pupillaire ;
- la figure 3 est une vue dans le plan focal de sortie du télescope pour un dispositif spectrophotométrique conforme à la présente invention ;
- la figure 4 illustre l'utilisation de la surface photosensible d'un détecteur matriciel qui est utilisé dans un dispositif spectrophotométrique conforme à la présente invention ;
- la figure 5 est une vue en perspective qui correspond à la figure 3, et qui montre une mise en œuvre de prismes d'alignement pupillaire ; et
- la figure 6 représente une utilisation à bord d'un satellite d'un dispositif spectrophotométrique qui est conforme à la présente invention.

Pour raison de clarté, les dimensions des éléments qui sont représentés dans ces figures ne correspondent ni à des dimensions réelles ni à des rapports de dimensions réels. En outre, des références identiques qui sont indiquées dans des figures différentes désignent des éléments identiques ou qui ont des fonctions identiques.

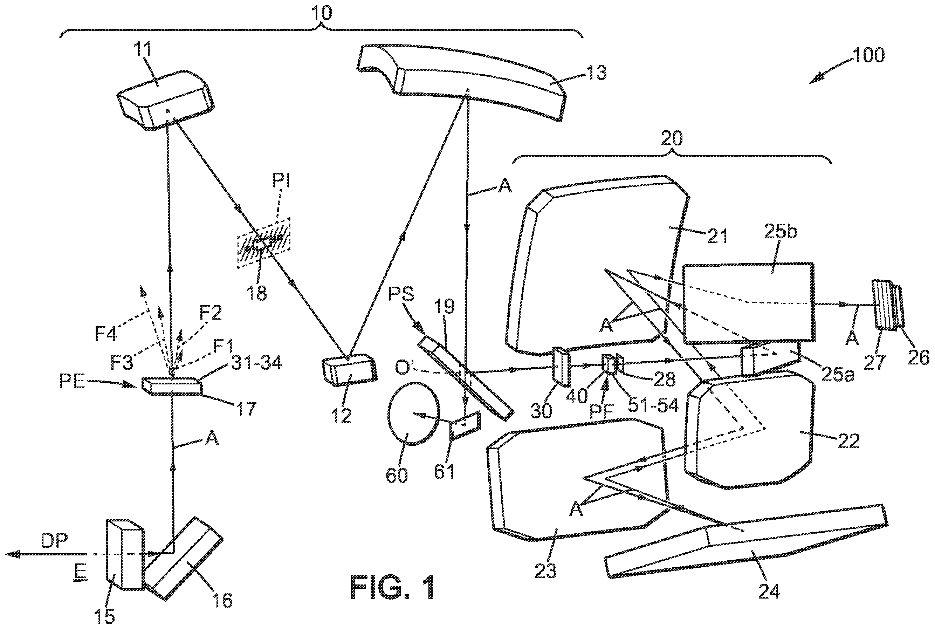

Conformément à la figure 1, un dispositif spectrophotométrique conforme à la présente invention, désigné globalement par la référence 100, comprend un télescope 10 et un spectrophotomètre 20. La ligne continue orientée qui est désignée par A indique l'axe optique du dispositif 100, orienté conformément au sens de propagation du rayonnement.

Le télescope 10 peut être de l'un des modèles connus de l'Homme du métier, par exemple un modèle à trois miroirs tel que représenté. En particulier, ce peut être un télescope de Korsch. La lettre E désigne l'entrée du rayonnement dans le télescope 10, DP désigne la direction de pointage du télescope 10, PF désigne le plan focal de sortie du télescope 10, et les autres références ont les significations suivantes :
- 11, 12, 13: miroirs primaire, secondaire et tertiaire, respectivement, du télescope 10
- 15: brouilleur de polarisation optionnel
- 16: miroir de renvoi optionnel
- PE: pupille d'entrée du télescope 10
- PS: pupille de sortie du télescope 10
- 17: masque pupillaire disposé dans la pupille d'entrée PE
- 18: masque de champ optionnel
- 19: composant de séparation de faisceaux, optionnel et disposé dans la pupille de sortie PS

De façon connue, le télescope 10 peut former une image intermédiaire d'une scène qui est située à grande distance devant l'entrée E dans la direction de pointage DP. Cette image intermédiaire est alors située dans un plan focal intermédiaire PI du télescope 10, entre le miroir primaire 11 et le miroir secondaire 12 pour le type de télescope représenté.

Le brouilleur de polarisation 15 et le miroir de renvoi 16 sont optionnels et disposés à l'entrée E du télescope 10. Eventuellement, un seul de ces deux composants optiques peut être utilisé dans le dispositif 100. Leurs mises en œuvre sont aussi usuelles pour l'Homme du métier, si bien qu'il n'est pas nécessaire de les décrire à nouveau.

Dans l'exemple de réalisation de l'invention qui est représenté, la pupille d'entrée PE est située en amont du miroir primaire 11 par rapport au sens de propagation du rayonnement qui pénètre par l'entrée E dans le télescope 10. La pupille de sortie PS est l'image de la pupille d'entrée PE par la succession des trois miroirs 11, 12 et 13.

Par principe de conjugaison optique dans le télescope 10, un faisceau de rayonnement qui provient d'une source éloignée dans la direction de pointage DP et qui pénètre dans le télescope par l'entrée E, est focalisé dans le plan focal de sortie PF.

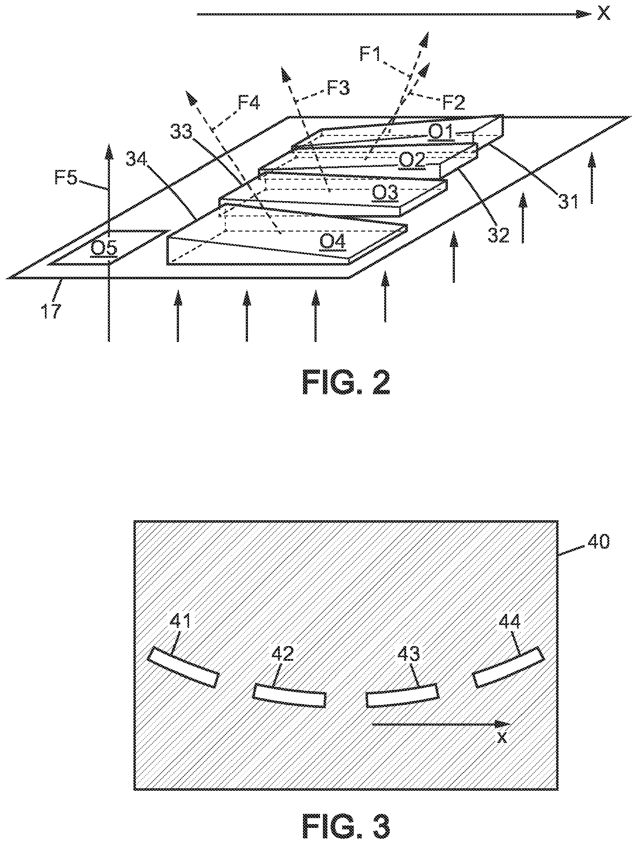

Le masque pupillaire 17 est disposé dans la pupille d'entrée PE, et comporte plusieurs ouvertures séparées qui sont réparties à l'intérieur de la pupille d'entrée PE. Les positions et dimensions de ces ouvertures dans la pupille d'entrée PE peuvent être variées entre des modes de réalisation différents du dispositif 100, notamment en fonction de critères radiométriques et spectraux du rayonnement, ainsi qu'en fonction de contraintes d'encombrement et de passage des faisceaux sans être occultés au sein du télescope 10. Dans la figure 2, 01-04 désignent quatre ouvertures du masque pupillaire 17, pour un dispositif 100 à quatre bandes spectrales de mesures spectrophotométriques qui est utilisé à titre d'illustration dans la présente description. Comme expliqué dans la suite, les ouvertures 01-04 du masque pupillaire 17 sont dédiées une-à-une aux bandes spectrales des mesures spectrophotométriques. L'ouverture supplémentaire 05 qui est représentée dans la figure 2, optionnelle et dépourvue de prisme de séparation pupillaire, ne correspond pas à une bande spectrale de mesure spectrophotométrique, et son utilité sera décrite plus loin. Chacune des ouvertures du masque pupillaire 17 forme donc une sous-pupille séparée à l'intérieur de la pupille d'entrée PE.

Des prismes de séparation pupillaire sont disposés un-à-une contre chacune des ouvertures 01-04 du masque pupillaire 17, et sont désignés par les références 31-34 dans la figure 2 pour l'exemple considéré à quatre bandes spectrales de mesure. Chacun des prismes de séparation pupillaire 31-34 recouvre totalement l'ouverture correspondante du masque pupillaire, si bien que le faisceau de rayonnement qui traverse cette ouverture est entièrement dévié par le prisme, conformément à l'angle au sommet et à l'orientation de ce prisme. Des départs de ces faisceaux déviés à partir des prismes de séparation pupillaire 31-34 sont représentés en traits interrompus dans les figures 1 et 2, et les faisceaux déviés sont désignées par les références F1-F4. Les déviations qui sont produites par les primes de séparation pupillaire 31-34 sont différentes entre elles, dans au moins une direction qui est notée X sur la figure 2. Tous les faisceaux de rayonnement F1-F4 qui traversent l'une des ouvertures 01-04 du masque pupillaire 17 convergent ensuite en des endroits respectifs séparés du plan focal de sortie PF, dont les emplacements sont déterminés par les déviations de faisceaux produites par les prismes de séparation pupillaire 31-34. Ces emplacements de convergence dans le plan focal de sortie PF sont décalés parallèlement à une direction x qui correspond à la direction X à travers les réflexions sur les miroirs 11, 12 et 13. Pour cette raison, les directions X et x peuvent être désignées ensemble par direction de déviation prismatique.

Selon un perfectionnement du dispositif 100, un premier masque de champ 18 peut être disposé dans le plan focal intermédiaire PI. Ce premier masque de champ 18 possède des ouvertures qui correspondent, par conjugaison optique à travers les miroirs 12 et 13, à des fentes qui sont disposées dans le plan focal de sortie PF et sont décrites plus loin. Un tel premier masque de champ 18 limite le champ utile du dispositif 100 autour de la direction de pointage DP, avec des marges périphériques pour éviter d'occulter des parties utiles des faisceaux de rayonnement qui sont issus des ouvertures 01-04 du masque pupillaire 17, y compris l'ouverture supplémentaire 05 le cas échéant.

Le composant optionnel 19 qui est disposé dans la pupille de sortie PS peut être un simple miroir de repli des faisceaux de rayonnement F1-F4. Mais lorsque le masque pupillaire 17 possède l'ouverture supplémentaire 05, le composant 19 peut être adapté pour diriger le faisceau de rayonnement qui est issu de cette ouverture supplémentaire 05, désigné par F5 sur la figure 2, vers un système d'imagerie annexe 60, séparément des autres faisceaux F1-F4 issus des ouvertures 01-04. Pour cette raison, le composant 19 a été appelé composant de séparation de faisceaux dans la partie générale de la présente description. Le système d'imagerie 60, aussi optionnel, peut alors saisir une image qui est formée par le télescope 10 d'un contenu de scène qui se trouve dans la direction de pointage DP. Par exemple, le composant de séparation de faisceaux 19 peut être un miroir plan avec une ouverture O' qui est située dans la pupille de sortie PS à l'endroit de l'image de l'ouverture supplémentaire 05 qui est formée par les miroirs 11, 12 et 13. Dans le mode particulier de réalisation de l'invention qui est représenté sur la figure 1, un miroir de repli annexe 61 est utilisé entre le composant de séparation de faisceaux 19 et le système d'imagerie 60. Il est encore rappelé que la voie d'imagerie qui est constituée par l'ouverture supplémentaire 05 du masque pupillaire 17, le composant de séparation des faisceaux 19, le système d'imagerie 60 avec le miroir de repli annexe 61 le cas échéant, n'est pas indispensable à l'invention, ni liée au principe de celle-ci. Lorsque cette voie d'imagerie est prévue, il peut être avantageux de supprimer l'effet du brouilleur de polarisation 15 dans l'ouverture supplémentaire 05, par exemple en ménageant un trou dans le brouilleur de polarisation 15 à l'endroit de passage du faisceau de rayonnement F5 qui pénètre dans le télescope 10 par l'ouverture supplémentaire 05.

Un masque à fentes 40 est disposé dans le plan focal de sortie PF du télescope 10. La figure 3 est donc une vue en plan de ce masque 40. Il est opaque pour le rayonnement en dehors des fentes, et comporte autant de fentes que le nombre de bandes spectrales du dispositif 100. Les fentes, désignées par les références 41-44, sont disposées aux endroits de convergence des faisceaux de rayonnement F1-F4 qui sont issus respectivement des ouvertures 01-04 du masque pupillaire 17 en ayant été déviés par les prismes de séparation pupillaire 31-34. Les fentes 41-44 sont donc décalées entre elles selon la direction de déviation prismatique x, et sont en outre orientées longitudinalement sensiblement selon cette direction. Les décalages entre les fentes 41-44 parallèlement à la direction x sont donc déterminés par les angles au sommet des prismes de séparation pupillaire 31-34. Toutes les fentes 41-44 ont préférablement la même longueur, mais deux fentes successives selon la direction x peuvent éventuellement se rejoindre pour former une fente continue.

Possiblement, les fentes 41-44 peuvent être légèrement courbes, afin qu'elles suivent une courbure de champ qui est due au spectrophotomètre 20. Dans ce cas, cette courbure de champ du spectrophotomètre 20 peut être compensée par une courbure de champ identique qui est produite par le télescope 10.

Un autre masque de champ (non représenté) peut être situé en amont du masque à fentes 40 par rapport au sens de propagation du rayonnement, à quelques millimètres devant ce masque à fentes 40. Cet autre masque de champ possède des ouvertures qui correspondent aux fentes 41-44, et limite d'une façon supplémentaire le champ utile du dispositif 100 autour de la direction de pointage DP.

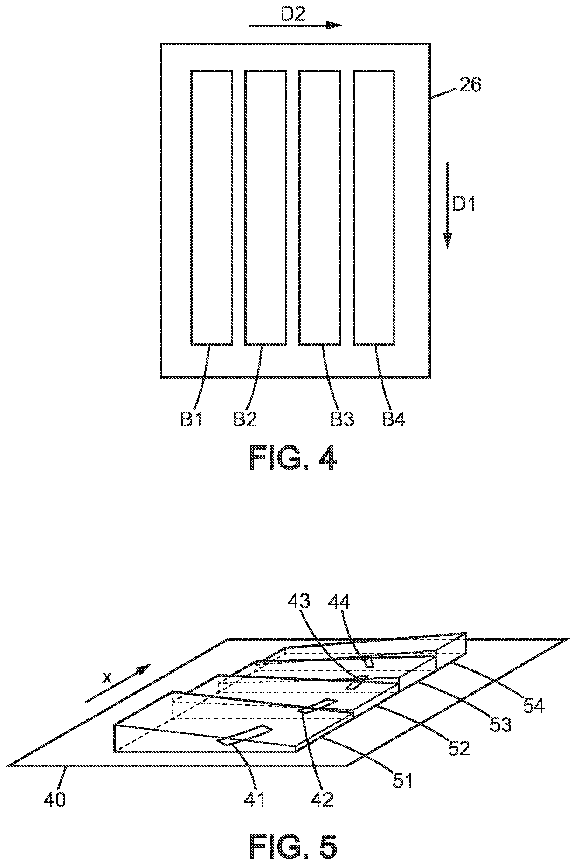

Le spectrophotomètre 20 peut être d'un des types connus de l'Homme du métier, mais une configuration du type quasi-Littrow est particulièrement avantageuse pour réduire l'encombrement qui est provoqué par le spectrophotomètre. Par exemple, comme représenté sur la figure 1, le spectrophotomètre 20 peut comporter trois miroirs 21, 22 et 23 pour collimater les faisceaux de rayonnement F1-F4 qui sont issus des fentes 41-44, un réseau diffractant à échelette 24 fonctionnant en réflexion, et un détecteur d'image matriciel 26. Le réseau diffractant à échelette 24 forme le composant d'étalement spectral mentionné dans la partie générale de la présente description. Conformément à la configuration de quasi-Littrow, les faisceaux F1-F4 qui sont issus des fentes 41-44 sont réfléchis par le réseau diffractant 24 vers la succession des miroirs 21-23, selon un chemin optique qui est proche de celui parcouru pour parvenir au réseau diffractant 24 à partir des fentes 41-44, mais avec un sens de propagation du rayonnement qui est inverse. Les fentes 41-44 sont alors imagées par le spectrophotomètre 20 sur la surface photosensible du détecteur 26. Le réseau 24 produit une diffraction des faisceaux de rayonnement F1-F4 qui sont issus des fentes 41-44, résultant en un étalement de l'image de chacune des fentes 41-44 sur le détecteur 26, parallèlement à une direction commune appelée direction d'étalement spectral. Le spectrophotomètre 20 est orienté par rapport aux prismes de séparation pupillaire 31-34 de sorte que la direction d'étalement spectral soit perpendiculaire à l'image de la direction de déviation prismatique x qui est formée par le spectrophotomètre 20 sur le détecteur 26. La figure 4 montre le contenu d'image qui apparaît ainsi sur la surface photosensible du détecteur 26. Il est constitué de quatre bandes géométriques B1-B4 qui sont issues chacune de l'image d'une des fentes 41-44 à travers le spectrophotomètre 20. Chaque bande géométrique possède donc comme base l'image de la fente correspondante, et s'étend parallèlement à la direction d'étalement spectral. Les bandes géométriques B1-B4 sont décalées les unes par rapport aux autres perpendiculairement à la direction d'étalement spectral conformément aux déviations prismatiques qui sont produites par les prismes de séparation pupillaire 31-34. La direction d'étalement spectral a été appelée première direction de détection dans la partie générale de la présente description, et est notée D1 sur la figure 4. La direction perpendiculaire à D1, notée D2 et appelée seconde direction de détection, est conjuguée optiquement avec la direction de déviation prismatique x.

L'affectation des bandes géométriques B1-B4 qui sont ainsi formées sur la surface photosensible du détecteur 26, à des bandes spectrales de mesures spectrophotométriques, est réalisée par un ensemble de filtres 27, dit premier ensemble de filtres. Les filtres de l'ensemble 27 sont maintenus juste devant la surface photosensible du détecteur 26, et chaque filtre recouvre toute la bande géométrique correspondante. Ainsi, le rayonnement qui est détecté par le détecteur 26 dans l'une des bandes géométriques B1-B4 est limité à la bande passante spectrale de celui des filtres de l'ensemble 27 qui recouvre cette bande géométrique. Le passage d'un pixel de la surface photosensible du détecteur 26 au pixel suivant selon la direction de détection D1 correspond à une variation de longueur d'onde à l'intérieur de la bande spectrale de celui des filtres sous lequel se trouvent ces pixels. Ainsi, la lecture des pixels d'une même colonne du détecteur 26, parallèlement à la direction de détection D1 à l'intérieur d'une des bandes géométriques B1-B4, fournit une évaluation de la distribution spectrale d'intensité du rayonnement dans la bande spectrale qui correspond à cette bande géométrique. Simultanément, le passage d'une bande spectrale de mesure spectrophotométrique à une autre correspond à un déplacement selon la direction de détection D2 pour changer de bande géométrique. Au niveau du détecteur 26, le champ utile du dispositif 100 autour de la direction de pointage DP est limité par les longueurs des fentes 41-44, mais il peut être limité de façon supplémentaire par une sélection le long la direction de détection D2, des pixels qui sont effectivement lus à l'intérieur de chacune des bandes géométriques B1-B4. Possiblement, les signaux de lecture qui proviennent de pixels sélectionnés et alignés selon la direction de détection D2, mais qui appartiennent à une même des bandes géométriques B1-B4, peuvent être additionnés pour augmenter le rapport signal-sur-bruit. Préférentiellement, plusieurs regroupements de pixels adjacents peuvent être effectués, ce qui permet d'avoir une information spatiale et ainsi des mesures sur des colonnes d'atmosphère adjacentes. Ainsi, s'il y a p pixels pour chaque bande, et que l'on désire des mesures pour q colonnes d'atmosphère, il suffit de faire q regroupements de p/q pixels adjacents chacun (par exemple p=300 et q=3 regroupements de 100 pixels adjacents chacun permettent trois mesures de colonnes d'atmosphère).

Possiblement, des ensembles supplémentaires de filtres qui ont des caractéristiques spectrales identiques à celles des filtres du premier ensemble 27, peuvent être disposés au niveau de la pupille d'entrée PE du télescope 10 et au niveau des fentes 41-44, ou bien uniquement à un seul de ces deux emplacements. De tels filtres supplémentaires qui sont disposés au niveau de la pupille d'entrée PE sont affectés un-à-une à chacune des ouvertures 01-04 du masque pupillaire 17. Par exemple, ils peuvent être portés par les prismes de séparation pupillaire 31-34. Evidemment, le filtre supplémentaire qui est affecté à chacune des ouvertures 01-04 doit être identique ou compatible avec le filtre de l'ensemble 27 en suivant celui des faisceaux de rayonnement F1-F4 qui est issu de cette ouverture à travers le dispositif 100 jusqu'au détecteur 26. La même condition s'applique à des filtres supplémentaires qui sont disposés au niveau des fentes 41-44, ou à proximité de celles-ci.

La figure 1 montre en outre deux miroirs de renvoi 25a et 25b, optionnels, qui sont utilisés pour décaler latéralement par rapport au miroir 21, dans des sens opposés, le masque à fentes 40 d'une part, et le détecteur 26 avec l'ensemble de filtres 27 d'autre part. Ainsi, le long du trajet des faisceaux de rayonnement F1-F4 vers le réseau diffractant 24, le miroir de renvoi 25a est situé entre le masque à fentes 40 et le miroir 21, et le long du trajet des faisceaux de rayonnement F1-F4 en retour du réseau diffractant 24, le miroir de renvoi 25b est situé entre le miroir 21 et l'ensemble de filtres 27. Une telle configuration résout des difficultés d'encombrement, notamment lorsque le spectrophotomètre 20 est contenu dans un cryostat de protection contre du rayonnement thermique parasite. Une fenêtre optique du cryostat, qui est traversée par les faisceaux de rayonnement F1-F4 issus du miroir tertiaire 13 du télescope 10, peut être située entre la pupille de sortie PS et le plan focal de sortie PF du télescope 10. Une telle fenêtre de cryostat est désignée par la référence 30 sur la figure 1.

Du fait des décalages des sous-pupilles à l'intérieur de la pupille d'entrée PE du télescope 10, les faisceaux de rayonnement F1-F4 qui forment les bandes géométriques B1-B4 sur le détecteur 26, peuvent être éloignés transversalement les uns des autres au niveau du réseau diffractant 24. Il est alors possible que ces éloignements entre faisceaux nécessitent que le réseau diffractant 24 ait des dimensions importantes, provoquant un encombrement gênant, voire qu'un réseau diffractant suffisamment grand ne puisse pas être fabriqué. Pour résoudre cette difficulté, des prismes supplémentaires 51-54, appelés prismes d'alignement pupillaire et visibles dans la figure 5, peuvent être disposés un-à-une contre les fentes 41-44, préférablement du côté du spectrophotomètre 20. Ainsi les prismes d'alignement pupillaire 51-54 ne modifient pas les positions des bandes géométriques B1-B4 sur la surface photosensible du détecteur 26, mais permettent de superposer les faisceaux de rayonnement F1-F4 les uns aux autres au niveau du réseau diffractant 24, ou tout au moins de les rapprocher les uns des autres. Le réseau diffractant 24 peut ainsi être de taille réduite. Le cas échéant, chacun des prismes d'alignement pupillaire 51-54 peut porter un filtre supplémentaire comme évoqué plus haut, en concordance avec la bande spectrale de mesure qui correspond à la fente contre laquelle ce prisme d'alignement pupillaire est disposé. Eventuellement chaque prisme d'alignement pupillaire peut être légèrement incliné pour superposer plus précisément la pupille d'entrée du spectrophotomètre 20 aux images qui sont formées par le télescope 10 des ouvertures 01-04 du masque pupillaire 17, correspondant à des sous-pupilles de sortie du télescope.

Un masque à ouvertures 28 peut aussi être disposé en aval des prismes d'alignement pupillaire 51-54 par rapport au sens de propagation du rayonnement, à quelques millimètres des prismes 51-54, pour supprimer des parties parasites de rayonnement qui résulteraient de réflexions intempestives sur les faces des prismes 51-54.

Les bandes spectrales de mesures spectrophotométriques du dispositif 100, qui sont déterminées par les filtres, peuvent être situées dans le proche infrarouge. Ces bandes spectrales peuvent être, à titre d'exemple : [757,8 nm ; 767,5 nm] pour la bande B1, [1593,8 nm; 1717,2 nm] pour la bande B2, [2018,8 nm ; 2048,5 nm] pour la bande B3, et [1782,4 nm ; 1707,0 nm] pour la bande B4. Ces bandes spectrales sont adaptées en particulier pour une mission spatiale de caractérisation des flux gazeux de composés carbonés qui se produisent à la surface de la Terre.

Les valeurs numériques suivantes peuvent aussi être adoptées pour les composants optiques du dispositif 100, encore à titre d'exemple :
longueur focale du télescope 10 : de l'ordre de 122 mm
dimensions de la pupille d'entrée du télescope 10 : de l'ordre de 40 x 26 mm²
dimensions de chacune des fentes 41-44: de l'ordre de 0,05 mm x 1,30 mm, produisant une largeur d'environ 100 pixels pour chacune des bandes géométriques B1-B4 selon la direction de détection D2
dimensions du réseau diffractant 24 : de l'ordre de 80 mm x 54 mm
densité de traits du réseau diffractant 24 : 60,39 lignes par millimètre, produisant les ordres de diffraction suivants : 40 pour la bande B1, 19 pour la bande B2, 15 pour la bande B3 et 18 pour la bande B4
angle de blaze du réseau diffractant 24 : 67,30 °
angle d'incidence du rayonnement sur le réseau diffractant 24 : 70,30 °
longueur focale du spectrophotomètre 20 en configuration de quasi-Littrow : 243 mm
taille du détecteur matriciel 26 : 1000 x 1000 pixels
longueur de chacune des bandes géométriques B1-B4 selon la direction de détection D1 : environ 1000 pixels
angles au sommet des prismes de séparation pupillaire 31-34 : 20,41 ° pour le prisme 31 produisant la bande géométrique B1, 6,82 ° pour le prisme 32 produisant la bande géométrique B2, 6,66 ° pour le prisme 33 produisant la bande géométrique B3, et 18,63 ° pour le prisme 34 produisant la bande géométrique B4, produisant un espacement d'environ 150 pixels, selon la direction de détection D2, entre deux des bandes géométriques B1-B4 qui sont voisines

Dans ces conditions, le dispositif 100 peut avoir une masse qui est inférieure à ou de l'ordre de 70 kg, et des dimensions qui sont inférieures à ou de l'ordre de 900 mm x 620 mm x 450 mm, incluant un cryostat pour contenir le spectrophotomètre mais sans compter un cylindre de garde («baffle» en anglais) qui serait disposé autour de l'entrée E du télescope 10.

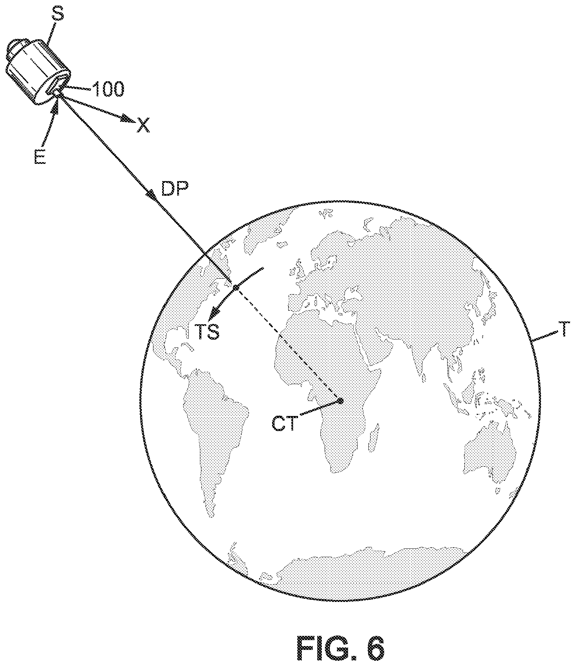

Enfin, la figure 6 illustre une utilisation du dispositif 100 qui vient d'être décrit à bord d'un satellite terrestre. Le satellite S est en orbite autour de la Terre T. Pendant une utilisation du dispositif 100, le satellite S est préférablement orienté de sorte que la direction de pointage DP soit dirigée vers le centre CT de la Terre T. Ainsi, la direction de pointage DP est orientée au nadir, comme représenté. En outre, le satellite S est aussi préférentiellement tourné autour de la direction de pointage DP ainsi orientée de sorte que la direction de déviation prismatique X soit perpendiculaire à la trace au sol du défilement du satellite S, notée TS. Autrement dit, l'image du sol terrestre qui est formée par le télescope 10 dans le plan focal de sortie PF défile selon une direction qui est perpendiculaire à la direction x. De cette façon, des mesures spectrophotométriques peuvent être effectuées simultanément dans les quatre bandes spectrales, pour caractériser des composés carbonés qui sont contenus dans l'atmosphère terrestre le long de la direction de pointage DP. Par mesures qui sont effectuées simultanément, on entend des mesures dont la simultanéité n'est limitée que par les contraintes de lecture des pixels du détecteur matriciel 26.

Il est entendu que l'invention peut être reproduite en modifiant des aspects secondaires de celle-ci par rapport aux modes de réalisation qui ont été décrits en détail ci-dessus. En particulier, elle peut être adaptée pour obtenir un dispositif spectrophotométrique qui possède un nombre quelconque de bandes spectrales de mesure. Enfin, il est rappelé que toutes les valeurs numériques citées ne l'ont été qu'à titre d'exemples non limitatifs. L'invention est définie par les revendications suivantes.

## Revendications

1. Dispositif spectrophotométrique à plusieurs bandes spectrales de mesure (100) comprenant :
- un télescope (10) ayant une pupille d'entrée (PE) et un plan focal de sortie (PF), adapté pour focaliser dans le plan focal de sortie, du rayonnement qui entre dans le télescope à travers la pupille d'entrée ;
- un spectrophotomètre (20) ayant une entrée qui est superposée au plan focal de sortie (PF) du télescope (10), et comprenant un composant d'étalement spectral (24) et un détecteur matriciel (26) qui est conjugué optiquement avec l'entrée du spectrophotomètre, ledit détecteur ayant une surface photosensible qui s'étend dans une première direction de détection (D1) parallèle à une direction d'étalement spectral produite par le composant d'étalement spectral, et qui s'étend aussi dans une seconde direction de détection (D2) perpendiculaire à la première direction de détection,
le dispositif (100) étant **caractérisé en ce qu'**il comprend en outre :
- un masque pupillaire (17) disposé dans la pupille d'entrée (PE) du télescope (10), et ayant plusieurs ouvertures (01-04) formant des sous-pupilles séparées qui sont respectivement dédiées aux bandes spectrales de mesure ;
- des prismes de séparation pupillaire (31-34), qui sont disposés un-à-une contre les ouvertures (01-04) du masque pupillaire (17), de sorte que chaque prisme de séparation pupillaire dévie une partie du rayonnement qui traverse la sous-pupille correspondante selon une direction de déviation prismatique (X) qui est commune à tous les prismes de séparation pupillaire, et avec une amplitude de déviation prismatique qui est différente de celle de chaque autre prisme de séparation pupillaire, et le spectrophotomètre (20) étant orienté par rapport aux prismes de séparation pupillaire de sorte que la seconde direction de détection (D2) corresponde optiquement à la direction de déviation prismatique à travers le télescope et le spectrophotomètre ;
- plusieurs fentes (41-44) possiblement incurvées, réparties dans l'entrée du spectrophotomètre (20) de sorte qu'une direction longitudinale des fentes corresponde optiquement à la direction de déviation prismatique (X) à travers le télescope (10), et les fentes étant décalées entre elles de façon à recevoir chacune à travers l'une des ouvertures (01-04) du masque pupillaire (17) et l'un des prismes de séparation pupillaire (31-34), et à travers le télescope, une partie respective du rayonnement qui provient d'une direction de pointage (DP) du télescope ; et
- un premier ensemble de filtres (27), déterminant chacun l'une des bandes spectrales de mesure, les filtres du premier ensemble étant disposés devant la surface photosensible du détecteur (26), chaque filtre dudit premier ensemble étant efficace à l'intérieur d'une ouverture de détection qui est superposée selon la seconde direction de détection (D2) à une image d'une seule des fentes (41-44), formée par le spectrophotomètre (20) avec une partie du rayonnement entrée dans le télescope (10) par une seule des ouvertures (01-04) du masque pupillaire (17), et l'ouverture de détection de chaque filtre s'étendant selon la première direction de détection (D1).

2. Dispositif selon la revendication 1, comprenant en outre au moins un second ensemble de filtres, correspondant aussi un-à-un aux bandes spectrales de mesure, et qui sont disposés au niveau des prismes de séparation pupillaire (31-34), ou à l'intérieur du spectrophotomètre (20) entre l'entrée dudit spectrophotomètre et le composant d'étalement spectral (24), de sorte qu'un filtre du premier ensemble (27) et un filtre de chaque second ensemble qui correspondent à une même bande spectrale soient traversés par une même partie du rayonnement entrée dans le télescope (10) par une seule des ouvertures (01-04) du masque pupillaire (17).

3. Dispositif selon la revendication 1 ou 2, comprenant en outre au moins un masque de champ qui est disposé à proximité du plan focal de sortie (PF) du télescope (10), ou dans un plan d'image intermédiaire (PI) du télescope, chaque masque de champ ayant des ouvertures qui correspondent aux fentes (41-44) ou qui ont des images superposées aux dites fentes, lesdites images étant formées par une partie du télescope qui est comprise entre le masque de champ et le plan focal de sortie dudit télescope, avec le rayonnement entré dans le télescope par les ouvertures (01-04) du masque pupillaire (17).

4. Dispositif selon l'une quelconque des revendications précédentes, comprenant en outre un ensemble de prismes supplémentaires (41-44), dits prismes d'alignement pupillaire, qui sont disposés un-à-une contre les fentes (41-44), et qui sont adaptés pour superposer sur ledit composant d'étalement spectral, les unes aux autres toutes les parties du rayonnement qui sont issues des fentes en étant entrées dans le télescope chacune par une seule des ouvertures (01-04) du masque pupillaire (17).

5. Dispositif selon l'une quelconque des revendications précédentes, dans lequel le composant d'étalement spectral (24) est un réseau diffractant, et le spectrophotomètre est agencé de sorte que le rayonnement qui est entré dans le télescope par les ouvertures (01-04) du masque pupillaire (17) soit réfléchi par le réseau diffractant.

6. Dispositif selon l'une quelconque des revendications précédentes, comprenant en outre un brouilleur de polarisation (15) qui est disposé en amont de la pupille d'entrée (PE) du télescope (10) par rapport à un sens de propagation du rayonnement dans le télescope, ledit brouilleur de polarisation étant adapté pour mélanger des polarisations différentes dans chaque partie du rayonnement qui traverse une des ouvertures (01-04) du masque pupillaire (17).

7. Dispositif selon l'une quelconque des revendications précédentes, comprenant au moins N ouvertures (01-04) dans le masque pupillaire (17), N prismes de séparation pupillaire (31-34), N fentes (41-44) et N filtres dans le premier ensemble de filtres (37), pour permettre des mesures spectrophotométriques simultanées dans N bandes spectrales, N étant un nombre entier compris entre 2 et 12, ou égal à 2 ou 12, de préférence compris entre 4 et 8, ou égal à 4 ou 8.

8. Dispositif selon l'une quelconque des revendications précédentes, dans lequel le masque pupillaire (17) comprend une ouverture supplémentaire (05), et le dispositif (100) comprend en outre un système d'imagerie (60) et un composant de séparation de faisceaux (19) qui est disposé dans une pupille de sortie (PS) du télescope (10), ledit composant de séparation de faisceaux étant adapté pour qu'une partie supplémentaire du rayonnement qui est entrée dans le télescope à travers l'ouverture supplémentaire du masque pupillaire soit transmise au système d'imagerie, alors que les parties du rayonnement qui sont entrées dans le télescope à travers lesdites ouvertures (01-04) du masque pupillaire (17), sont transmises en direction des fentes (41-44).

9. Procédé de mesure de composants chimiques qui sont présents à l'intérieur d'une zone de mesure dans l'atmosphère terrestre, ledit procédé comprenant les étapes suivantes :
/1/ installer un dispositif spectrophotomètrique à plusieurs bandes spectrales de mesure (100) qui est conforme à l'une quelconque des revendications précédentes, à bord d'un satellite (S) ;
/2/ placer le satellite (S) en orbite autour de la Terre (T), de sorte que le satellite survole la zone de mesure ;
/3/ orienter la direction de pointage (DP) du télescope (10) vers la zone de mesure ; et
/4/ pendant que la direction de pointage (DP) du télescope (10) est maintenue vers la zone de mesure, activer le détecteur (26) du spectrophotomètre (20) et saisir des signaux de lecture de pixels du détecteur, lesdits signaux de lecture fournissant, séparément à l'intérieur de bandes géométriques (B1-B4) dans la surface photosensible du détecteur qui sont associées optiquement et une-à-une aux fentes (41-44) à travers le spectrophotomètre (20), une distribution spectrale d'intensité du rayonnement qui provient de la zone de mesure dans l'une des bandes spectrales de mesure.

10. Procédé selon la revendication 9, suivant lequel le satellite (S) est orienté de sorte que la direction de pointage (DP) du télescope (10) soit superposée à une direction de nadir du satellite pendant l'étape /4/.

11. Procédé selon la revendication 9 ou 10, suivant lequel le satellite (S) est orienté de sorte que la direction de déviation prismatique (X) soit perpendiculaire à une direction de défilement d'une image de la zone de mesure formée par le télescope (10) dans le plan focal de sortie (PF), pendant l'étape /4/.

12. Procédé selon l'une quelconque des revendications 9 à 11, suivant lequel l'une au moins des bandes spectrales de mesure du dispositif (100) comprend une raie d'absorption d'au moins un composé carboné gazeux, tel que le dioxyde de carbone ou un composé d'aérosol.

## Patentansprüche

1. Spektrophotometrische Vorrichtung mit mehreren Spektralmessbändern (100) aufweisend:
- ein Teleskop (10) mit einer Eintrittspupille (PE) und einer fokalen Austrittsebene (PF), das eingerichtet ist, Strahlung, die über die Eintrittspupille in das Teleskop eintritt, in der fokalen Austrittsebene zu fokussieren;
- ein Spektrophotometer (20), dessen Eingang über die fokale Austrittsebene (PF) des Teleskops (10) gelegt ist und das eine spektrale Entfaltungskomponente (24) und einen matrixförmigen Detektor (26) aufweist, der mit dem Eingang des Spektrophotometers optisch konjugiert ist, wobei der Detektor eine lichtempfindliche Oberfläche hat, die sich in einer ersten Detektionsrichtung (D1), die parallel zu einer von der spektralen Entfaltungskomponente erzeugten spektralen Entfaltungsrichtung ist, erstreckt und die sich außerdem in einer zweiten Detektionsrichtung (D2), die senkrecht zur ersten Detektionsrichtung ist, erstreckt,
wobei die Vorrichtung (100) **dadurch gekennzeichnet ist, dass** sie ferner aufweist:
- eine Pupillenmaske (17), die in der Eintrittspupille (PE) des Teleskops (10) angeordnet ist und mehrere Öffnungen (01-04) hat, die separate Subpupillen bilden, die jeweils den Spektralmessbändern zugeordnet sind;
- pupillare Separationsprismen (31-34), die eins zu eins gegen die Öffnungen (01-04) der Pupillenmaske (17) angeordnet sind, derart, dass jedes pupillare Separationsprisma einen Teil der Strahlung, der durch die entsprechende Subpupille hindurchgeht, in eine prismatische Ablenkungsrichtung (X), die allen pupillaren Separationsprismen gemeinsam ist, ablenkt, und mit einer prismatischen Ablenkungsamplitude, die sich von derjenigen jedes anderen pupillaren Separationsprismas unterscheidet, und wobei das Spektrophotometer (20) bezüglich der pupillaren Separationsprismen derart orientiert ist, dass die zweite Detektionsrichtung (D2) optisch der prismatischen Ablenkungsrichtung durch das Teleskop und das Spektrophotometer entspricht;
- mehrere möglicherweise bogenförmige Schlitze (41-44), die in dem Eingang des Spektrophotometers (20) verteilt sind, so dass eine Längsrichtung der Schlitze optisch der prismatischen Ablenkungsrichtung (X) durch das Teleskop (10) entspricht, und wobei die Schlitze gegeneinander versetzt angeordnet sind, um jeweils durch eine der Öffnungen (01-04) der Pupillenmaske und eines der pupillaren Separationsprismen (31-34) und durch das Teleskop einen jeweiligen Teil der Strahlung, die von Ausrichtung (DP) des Teleskops herkommt, aufzunehmen; und
- eine erste Gruppe von Filtern (27), von denen jedes eines der Spektralmessbänder festlegt, wobei die Filter der ersten Gruppe vor der lichtempfindlichen Oberfläche des Detektors (26) angeordnet sind, und jedes Filter der ersten Gruppe innerhalb einer Detektionsöffnung wirksam ist, die in der zweiten Detektionsrichtung (D2) über ein Bild eines einzigen der Schlitze (41-44) gelegt ist, das von dem Spektrophotometer (20) mit einem durch eine einzige der Öffnungen (01-04) der Pupillenmaske (17) in das Teleskop (10) eingetretenen Teil der Strahlung erzeugt ist, und die Detektionsöffnung jedes Filters sich in der ersten Detektionsrichtung (D1) erstreckt.

2. Vorrichtung nach Anspruch 1, ferner aufweisend mindestens eine zweite Gruppe von Filtern, die ebenfalls eins zu eins den Spektralmessbändern entsprechen, und die im Bereich der pupillaren Separationsprismen (31-34) oder innerhalb des Spektrophotometers (20) zwischen dem Eingang des Spektrophotometers und der spektralen Entfaltungskomponente (24) angeordnet sind, derart, dass ein Filter der ersten Gruppe (27) und ein Filter jeder zweiten Gruppe, die einem gleichen Spektralband entsprechen, von einem gleichen Teil der Strahlung durchquert werden, der durch eine einzige der Öffnungen (01-04) der Pupillenmaske (17) in das Teleskop (10) eingetreten ist.

3. Vorrichtung nach Anspruch 1 oder 2, ferner aufweisend mindestens eine Feldmaske, die in der Nähe der fokalen Austrittsebene (PF) des Teleskops (10) oder in einer Zwischenbildebene (P1) des Teleskops angeordnet ist, wobei jede Feldmaske Öffnungen hat, die den Schlitzen (41-44) entsprechen oder die den Schlitzen überlagerte Bilder haben, wobei die Bilder von einem Teil des Teleskops, der zwischen der Feldmaske und der fokalen Austrittsebene des Teleskops ist, mit der durch die Öffnungen (01-04) der Pupillenmaske (17) in das Teleskop eingetretenen Strahlung erzeugt sind.

4. Vorrichtung nach einem der vorstehenden Ansprüche, ferner aufweisend eine Gruppe von zusätzlichen Prismen (41-44), pupillare Ausrichtungsprismen genannt, die eins zu eins gegen die Schlitze (41-44) angeordnet sind und die eingerichtet sind, über der spektralen Entfaltungskomponente alle Teile der Strahlung, die dadurch, dass sie jeweils durch eine einzige der Öffnungen (01-04) der Pupillenmaske (17) in das Teleskop eingetreten sind, von den Schlitzen herkommen, übereinander zu legen.

5. Vorrichtung nach einem der vorstehenden Ansprüche, in welcher die spektrale Entfaltungskomponente (24) ein Diffraktionsgitter ist, und das Spektrophotometer derart angeordnet ist, dass die Strahlung, die durch die Öffnungen (01-04) der Pupillenmaske (17) in das Teleskop eingetreten ist, von dem Diffraktionsgitter reflektiert wird.

6. Vorrichtung nach einem der vorstehenden Ansprüche, ferner aufweisend einen Polarisationsvernebler (15), der bezogen auf eine Ausbreitungsrichtung der Strahlung in dem Teleskop, vor der Eintrittspupille (PE) des Teleskops (10) angeordnet ist, wobei der Polarisationsvernebler eingerichtet ist, unterschiedliche Polarisationen in jedem Teil der Strahlung, der durch eine der Öffnungen (01-04) der Pupillenmaske hindurchgeht, zu mischen.

7. Vorrichtung nach einem der vorstehenden Ansprüche, aufweisend mindestens N Öffnungen (01-04) in der Pupillenmaske (17), N pupillare Separationsprismen (31-34), N Schlitze (41-44) und N Filter in der ersten Gruppe von Filtern (37), um gleichzeitige spektrophotometrische Messungen in N Spektralbändern zu erlauben, wobei N eine ganze Zahl zwischen 2 und 12 oder gleich 2 oder 12 ist, vorzugsweise zwischen 4 und 8 oder gleich 4 oder 8 ist.

8. Vorrichtung nach einem der vorstehenden Ansprüche, in welcher die Pupillenmaske (17) eine zusätzliche Öffnung (05) aufweist und die Vorrichtung (100) ferner ein Abbildungssystem (60) und eine Bündelseparationskomponente (19) aufweist, die in einer Austrittspupille (PS) des Teleskops (10) angeordnet ist, wobei die Bündelseparationskomponente so eingerichtet ist, dass ein zusätzlicher Teil der Strahlung, der durch die zusätzliche Öffnung der Pupillenmaske in das Teleskop eingetreten ist, zu dem Abbildungssystem weitergeleitet wird, während die Teile der Strahlung, die durch die Öffnungen (01-04) der Pupillenmaske (17) in das Teleskop eingetreten sind, in Richtung der Schlitze (41-45) weitergeleitet werden.

9. Verfahren zum Messen von chemischen Komponenten, die im Innern einer Messzone in der Erdatmosphäre vorhanden sind, wobei das Verfahren die folgenden Schritte aufweist:
/1/ Anordnen einer spektrophotometrischen Vorrichtung mit mehreren Spektralmessbändern (100), die einem der vorstehenden Ansprüche gemäß ist, an Bord eines Satelliten (S);
/2/ Bringen des Satelliten (S) in eine Umlaufbahn um die Erde (T) derart, dass der Satellit die Messzone überfliegt;
/3/ Orientieren der Ausrichtung (DP) des Teleskops (10) hin zur Messzone; und
/4/ unter Beibehaltung der Ausrichtung (DP) des Teleskops (10) hin zur Messzone, Aktivieren des Detektors (26) des Spektrophotometers (20) und Erfassen von Lesesignalen von Pixeln des Detektors, wobei die Lesesignale separat innerhalb von geometrischen Bändern (B1-B4) in der lichtempfindlichen Oberfläche des Detektors, die eins zu eins mit den Schlitzen (41-44) durch das Spektrometer (20) verknüpft sind, eine spektrale Intensitätsverteilung der Strahlung, die von der Messzone herkommt, in einem der Spektralmessbänder liefern.

10. Verfahren nach Anspruch 9, gemäß welchem der Satellit (S) so orientiert wird, dass während des Schritts /4/ die Ausrichtung (DP) des Teleskops (10) einer Nadirrichtung des Stalliten überlagert wird.

11. Verfahren nach Anspruch 9 oder 10, gemäß welchem der Satellit (S) so orientiert wird, dass während des Schritts /4/ die prismatische Ablenkungsrichtung (X) senkrecht zu einer Aufzeichnungsrichtung eines von dem Teleskop (10) in der fokalen Austrittsebene (PF) erzeugten Bilds der Messzone ist.

12. Verfahren nach einem der Ansprüche 9 bis 11, gemäß welchem mindestens das eine der Spektralmessbänder der Vorrichtung (100) eine Absorptionslinie mindestens einer gasförmigen Kohlenstoffkomponente, beispielsweise Kohlenstoffdioxid, oder einer Aerosolkomponente aufweist.

## Claims

1. Spectrophotometric device with a plurality of spectral measurement bands (100), comprising:
- a telescope (10) having an entrance pupil (PE) and an output focal plane (PF), adapted to focus, in the output focal plane, radiation that enters the telescope through the entrance pupil;
- a spectrophotometer (20) having an entrance which is superimposed on the output focal plane (PF) of the telescope (10), and comprising a spectral spreading component (24) and an array detector (26) which is optically conjugate with the entrance of the spectrophotometer, said detector having a photosensitive surface which extends in a first detection direction (D1) parallel to a direction of spectral spreading produced by the spectral spreading component, and which also extends in a second detection direction (D2) perpendicular to the first detection direction,
the device (100) being **characterized in that** it further comprises:
- a pupil mask (17) arranged in the entrance pupil (PE) of the telescope (10) and having a plurality of apertures (01-04) forming separate sub-pupils which are respectively dedicated to the spectral measurement bands;
- pupillary separating prisms (31-34), which are arranged one-on-one against the apertures (01-04) of the pupil mask (17) so that each pupillary separating prism deflects a portion of the radiation which passes through the corresponding sub-pupil in a prismatic deflection direction (X) which is common to all the pupillary separating prisms, and with a prismatic deflection amplitude which is different from that of every other pupillary separating prism, and the spectrophotometer (20) being oriented relative to the pupillary separating prisms so that the second detection direction (D2) optically corresponds to the prismatic deflection direction through the telescope and the spectrophotometer;
- a plurality of slits (41-44), possibly curved, which are distributed in the entrance of the spectrophotometer (20) so that the longitudinal direction of the slits optically corresponds to the prismatic deflection direction (X) through the telescope (10), and the slits being offset from one another so that each receives through one of the apertures (01-04) of the pupil mask (17) and one of the pupillary separating prisms (31-34), and through the telescope, a respective portion of the radiation which originates from a pointing direction (DP) of the telescope; and
- a first set of filters (27), each determining one of the spectral measurement bands, the filters of the first set being arranged in front of the photosensitive surface of the detector (26), each filter of said first set being effective within a detection aperture which is superimposed along the second detection direction (D2) on an image of only one of the slits (41-44), formed by the spectrophotometer (20) with a portion of the radiation entering the telescope (10) through a single one of the apertures (01-04) of the pupil mask (17), and the detection aperture of each filter extending in the first detection direction (D1).

2. Device according to claim 1, further comprising at least one second set of filters, also having a one-to-one correspondence to the spectral measurement bands, and which are arranged at the pupillary separating prisms (31-34), or inside the spectrophotometer (20) between the entrance of said spectrophotometer and the spectral spreading component (24), so that a filter of the first set (27) and a filter of each second set which correspond to the same spectral band are traversed by a same portion of the radiation which has entered the telescope (10) through only one of the apertures (01-04) of the pupil mask (17).

3. Device according to claim 1 or 2, further comprising at least one field mask which is arranged close to the output focal plane (PF) of the telescope (10) or in an intermediate image plane (PI) of the telescope, each field mask having apertures which correspond to the slits (41-44) or which have images superimposed on said slits, said images being formed by a part of the telescope comprised between the field mask and the output focal plane of said telescope, with the radiation that entered the telescope through the apertures (O1-O4) of the pupil mask (17).

4. Device according to any one of the preceding claims, further comprising an additional set of prisms (41-44), referred to as pupillary alignment prisms, which are arranged one-on-one against the slits (41-44) and are adapted to superimpose onto each other, on said spectral spreading component, all radiation portions coming from the slits after each has entered the telescope through one of the apertures (O1-O4) of the pupil mask (17).

5. Device according to any one of the preceding claims, wherein the spectral spreading component (24) is a diffraction grating, and the spectrophotometer is arranged so that the radiation which has entered the telescope through the apertures (01-04) of the pupil mask (17) is reflected by the diffraction grating.

6. Device according to any one of the preceding claims, further comprising a polarization scrambler (15) which is arranged upstream of the entrance pupil (PE) of the telescope (10) relative to a direction of propagation of the radiation in the telescope, said polarization scrambler being suitable for mixing different polarizations in each portion of the radiation which passes through one of the apertures (O1-O4) of the pupil mask (17).

7. Device according to any one of the preceding claims, comprising at least N apertures (O1-O4) in the pupil mask (17), N pupillary separating prisms (31-34), N slits (41-44), and N filters in the first set of filters (37), to enable simultaneous spectrophotometric measurements in N spectral bands, where N is an integer between 2 and 12, or equal to 2 or 12, preferably between 4 and 8, or equal to 4 or 8.

8. Device according to any one of the preceding claims, wherein the pupil mask (17) comprises an additional aperture (O5), and the device (100) further comprises an imaging system (60) and a beam splitting component (19) which is arranged in an exit pupil (PS) of the telescope (10), said beam splitting component being adapted so that an additional portion of the radiation which entered the telescope through the additional aperture of the pupil mask is transmitted to the imaging system, while the portions of the radiation which entered the telescope through said apertures (O1-O4) of the pupil mask (17) are transmitted in the direction of the slits (41-44).

9. Method for measuring chemical components present within a measurement area in the Earth's atmosphere, said method comprising the steps of:
/1/ installing on board a satellite (S) a spectrophotometric device with a plurality of spectral measurement bands (100) according to any of the preceding claims;
/2/ placing the satellite (S) in orbit around the Earth (T), so that the satellite flies over the measurement area;
/3/ orienting the pointing direction (DP) of the telescope (10) towards the measurement area; and
/4/ while the pointing direction (DP) of the telescope (10) is maintained towards the measurement area, activating the detector (26) of the spectrophotometer (20) and capturing readout signals from pixels of the detector, said readout signals providing, separately within geometric bands (B1-B4) in the photosensitive surface of the detector which are optically associated one-to-one with the slits (41-44) through the spectrophotometer (20), a spectral intensity distribution of the radiation which originates from the measurement area in one of the spectral measurement bands.

10. Method according to claim 9, wherein the satellite (S) is oriented so that the pointing direction (DP) of the telescope (10) is superimposed on a nadir direction of the satellite during step /4/.

11. Method according to claim 9 or 10, wherein the satellite (S) is oriented so that the prismatic deflection direction (X) is perpendicular to an advancement direction of an image of the measurement area formed by the telescope (10) in the output focal plane (PF), during step /4/.

12. Method according to any one of claims 9-11, wherein at least one of the spectral measurement bands of the device (100) comprises an absorption line of at least one gaseous carbon compound, such as carbon dioxide or an aerosol compound.
